# DEMANDE DE BREVET EUROPEEN

(11) **EP 3 750 745 A1**
(43) Date de publication de la demande: **16.12.2020**
(21) Numéro de dépôt: 19156024.2
(22) Date de dépôt: 07.02.2019
(51) Int. Cl.: B60N 3/02, B60N 2/70, B60N 2/01, B60N 2/24, B60N 2/30, B61D 33/00, B61D 37/00

(54) **DISPOSITIF DE PRÉHENSION POUR VÉHICULE DE TRANSPORT PUBLIC**

(30) Priorité: 08.12.2017 FR 1761861
(71) Demandeur: ALSTOM Transport Technologies, 93400 Saint-Ouen (FR)
(72) Inventeur: RODRIGUEZ-GOMEZ, Maria-Isabel, 59770 Marly (FR); BOULAY, Adrien, 59770 Marly (FR); HUART, Johan, 59990 Préseau (FR)
(74) Mandataire: Lavoix

(57) **Abrégé**

Le dispositif de préhension (10) comporte une barre verticale de préhension (14), s'étendant le long d'un axe vertical, et destinée à être saisie par un passager pour se maintenir en position debout. Il comporte :

- un élément (16) mobile en translation le long d'une direction parallèle à l'axe vertical, entre une position haute et une position basse, et

- au moins un élément de siège pliable (18), relié à l'élément mobile (16), et mobile entre une position repliée lorsque l'élément mobile (16) est en position haute, et une position déployée lorsque l'élément mobile (16) est en position basse.

## Description

La présente invention concerne un dispositif de préhension pour véhicule de transport public, comportant une barre verticale de préhension destinée à être saisie par un passager pour se maintenir en position debout.

Une telle barre verticale équipe plus généralement les véhicules de transport urbain, tels que les bus, les tramways et les métros.

Ces véhicules de transport urbain sont généralement également équipés de sièges fixes, et de sièges rabattables, dits « strapontins », destinés à être rabattus en cas de forte affluence de voyageurs et utilisés comme sièges lorsque l'espace disponible le permet.

L'invention a notamment pour but d'améliorer l'espace disponible dans le véhicule de transport urbain en cas de forte affluence de voyageurs, tout en conservant un confort satisfaisant en cas d'affluence de voyageurs modérée.

A cet effet, l'invention a notamment pour objet un dispositif de préhension pour véhicule de transport public, comportant une barre verticale de préhension, s'étendant le long d'un axe vertical, et destinée à être saisie par un passager pour se maintenir en position debout, caractérisé en ce qu'il comporte :
- un élément mobile en translation le long d'une direction parallèle à l'axe vertical, entre une position haute et une position basse,
- au moins un élément de siège pliable, relié à l'élément mobile, et mobile entre une position repliée lorsque l'élément mobile est en position haute, et une position déployée lorsque l'élément mobile est en position basse.

Lorsque l'élément de siège est replié, le dispositif de préhension selon l'invention est peu encombrant, et présente la même fonction et le même effet qu'une barre de préhension classique.

En revanche, lorsque l'élément de siège est déployé, il permet à un voyageur de bénéficier d'un siège pour voyager en position assise.

Un dispositif selon l'invention peut comporter en outre l'une ou plusieurs des caractéristiques suivantes, prises seules ou selon toutes combinaisons techniquement envisageables.
- L'élément de siège comporte deux premières tiges latérales, s'étendant chacune entre une première extrémité supérieure et une première extrémité inférieure respectives, et deux secondes tiges latérales, s'étendant chacune entre une seconde extrémité supérieure et une seconde extrémité inférieure respectives, et telles que : chaque première extrémité supérieure est reliée à l'élément mobile par une première liaison pivot, chaque première extrémité inférieure est reliée à l'une respective des secondes extrémités supérieures par une seconde liaison pivot, chaque seconde extrémité inférieure est reliée à un élément fixe par une troisième liaison pivot, et un organe d'assise pliable s'étend entre les deux premières tiges latérales.
- L'organe d'assise pliable est formé par un tissu, notamment au moins partiellement en kevlar.
- Le dispositif de préhension comporte un pied concentrique avec la barre verticale, et de diamètre supérieur à celui de la barre verticale, l'élément mobile étant relié à ce pied par une liaison glissante.
- L'élément fixe est formé par le pied.
- Le dispositif de préhension comporte une pluralité d'éléments de siège, répartis autour de l'axe vertical.
- Chaque élément de siège partage chacune de ses premières tiges et secondes tiges avec un autre élément de siège adjacent respectif.

L'invention concerne également un véhicule de transport public comprenant un dispositif de préhension tel que défini précédemment.

Avantageusement, le véhicule de transport public est dépourvu de siège fixe.

D'autres aspects et avantages de l'invention seront mis en lumière à la lecture de la description qui va suivre, donnée uniquement à titre d'exemple et faite en se référant aux figures, parmi lesquelles :
- la figure 1 est une vue en perspective d'un dispositif de préhension selon un exemple de mode de réalisation de l'invention, en position repliée, et
- la figure 2 est une vue similaire à la figure 1 du dispositif de préhension en position déployée.

On a représenté, sur les figures, un dispositif de préhension 10 selon un exemple de mode de réalisation de l'invention.

Ce dispositif de préhension 10 est destiné à équiper un véhicule de transport public, notamment un véhicule de transport urbain, par exemple un tramway, un métro ou un bus.

Le véhicule de transport public peut comporter une pluralité de tels dispositifs de préhension 10, répartis dans une salle de voyageurs.

Le dispositif de préhension 10 s'étend par exemple en hauteur depuis un sol jusqu'à un plafond de la salle de voyageurs.

Le dispositif de préhension 10 comporte un pied 12 cylindrique, solidarisé au sol, et prolongé vers le haut par une barre de préhension 14, concentrique avec le pied 12 et s'étendant depuis ce pied 12 jusqu'au plafond. Le pied 12 et la barre de préhension 14 s'étendent le long d'un axe vertical.

Le pied 12 présente un diamètre supérieur à celui de la barre de préhension.

Dans l'exemple décrit, le pied 12 présente une section transversale circulaire, mais il pourrait en variante présenter une section d'une autre forme, notamment polygonale. De même, dans l'exemple décrit, la barre de préhension 14 présente une section transversale circulaire, mais elle pourrait en variante présenter une section d'une autre forme, notamment polygonale.

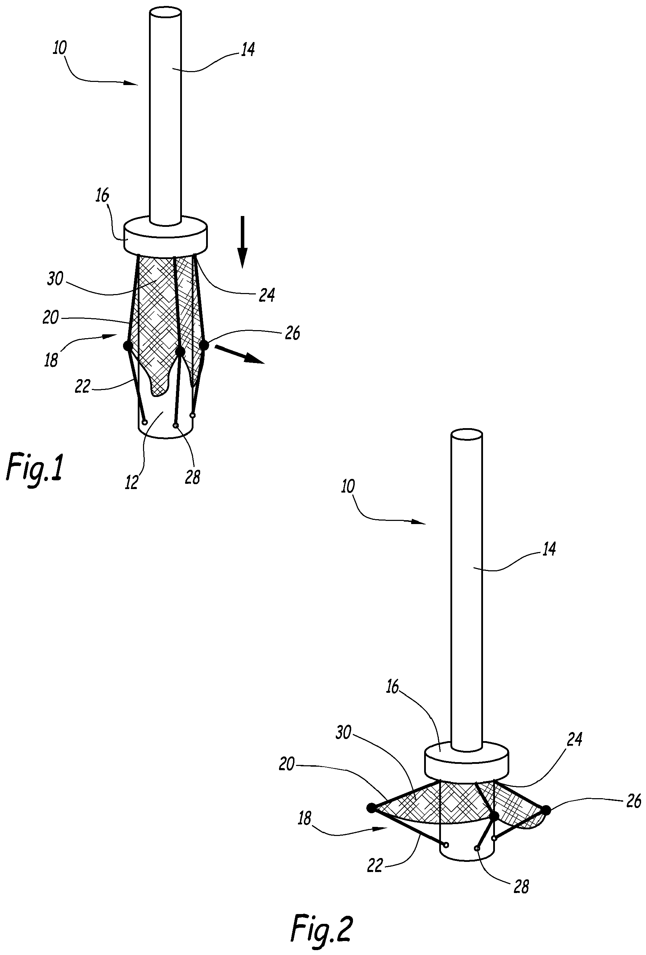

Le dispositif de préhension 10 selon l'invention comporte un élément 16 mobile en translation le long d'une direction concentrique à la barre verticale 14, entre une position haute (figure 1) et une position basse (figure 2).

En position haute, l'élément mobile 16 se trouve par exemple à une extrémité supérieure du pied 12. En position basse, l'élément mobile 16 se trouve par exemple environ à mi-hauteur du pied 12.

Avantageusement, le pied 12 comporte des butées de fin de course (non représentées) définissant les positions haute et basse, de sorte que l'élément mobile 16 ne dépasse pas ces positions haute et basse.

Dans l'exemple décrit, l'élément mobile 16 entoure le pied 12, et il est guidé en translation par ce pied 12. L'élément mobile 16 est par exemple relié à ce pied 12 par une liaison glissante.

Le dispositif de préhension 10 comporte par ailleurs au moins un élément de siège pliable 18.

L'élément de siège 18 est relié à l'élément mobile 16. Cet élément de siège 18 est mobile entre une position repliée lorsque l'élément mobile 16 est en position haute (figure 1), et une position déployée lorsque l'élément mobile 16 est en position basse (figure 2).

Dans l'exemple décrit, l'élément de siège 18 comporte deux premières tiges latérales 20, s'étendant chacune entre une première extrémité supérieure et une première extrémité inférieure respectives, et deux secondes tiges latérales 22, s'étendant chacune entre une seconde extrémité supérieure et une seconde extrémité inférieure respectives.

Chaque première extrémité supérieure est reliée à l'élément mobile 16 par une première liaison pivot 24. Cette première liaison pivot 24 présente un axe tangentiel au pied 12, ou parallèle à une tangente au pied 12. Ainsi, chaque première tige 20 est propre à s'écarter du pied 12 perpendiculairement à cette tangente.

Chaque première extrémité inférieure est reliée à l'une respective des secondes extrémités supérieures par une seconde liaison pivot 26. Chaque seconde liaison pivot 26 présente un axe parallèle à celui de la première liaison pivot de la même première tige 20.

Chaque seconde extrémité inférieure est reliée à un élément fixe, par exemple formé par le pied 12, par une troisième liaison pivot 28. Chaque troisième liaison pivot 28 présente un axe parallèle à celui de la seconde liaison pivot de la même seconde tige 22.

L'élément de siège 18 comporte en outre un organe d'assise pliable 30 s'étendant entre les deux premières tiges latérales 20.

L'organe d'assise pliable 30 est par exemple formé par un tissu. De préférence, ce tissu est formé en un matériau susceptible de résister aux détériorations notamment dues au vandalisme. Par exemple, le tissu est réalisé au moins partiellement en kevlar.

Dans l'exemple décrit, le dispositif de préhension 10 comporte une pluralité d'éléments de siège 18, répartis autour du pied 12.

Dans ce cas, avantageusement, chaque élément de siège 18 partage chacune de ses premières tiges latérales 20 et secondes tiges latérales 22 avec des éléments de siège adjacents respectifs.

Le fonctionnement du dispositif de préhension 10 va maintenant être décrit.

En cas de forte affluence de passagers, le dispositif de préhension 10 est en position repliée, représentée sur la figure 1. Les sièges 18 ne sont alors pas accessibles, et les passagers utilisent le dispositif de préhension 10 en se tenant à la barre verticale 14.

Dans cette position repliée, l'élément mobile 16 est en position haute, et les tiges 20, 22 s'étendent à proximité immédiate du pied 12. Chaque organe d'assise 30 est alors distendu entre les premières tiges 20 correspondantes.

En cas de faible affluence de passagers, si au moins un passager souhaite s'asseoir, il déplace l'élément mobile 16 en le poussant vers le bas. De par ce mouvement, les tiges rigides 20, 22 articulées s'écartent du pied 12. L'élément mobile 16 est ainsi déplacé jusqu'à la butée de fin de course basse, correspondant à sa position basse. La seconde liaison pivot 26 est alors écartée au maximum du pied 12.

Les premières tiges 20 s'écartant du pied 12, les organes d'assise 30 se retrouvent tendus entre les premières tiges 20 auxquelles ils sont reliés. Il est alors possible de s'asseoir sur ces organes d'assises, la partie de pied 12 s'étendant au-dessus de l'élément mobile 16 formant avantageusement un dossier.

Lorsque l'on ne souhaite plus utiliser les sièges 18, l'élément mobile 16 est relevé jusqu'à sa butée haute correspondant à la position haute, et les tiges 20, 22 se rabattent alors vers le pied 12.

Avantageusement, le dispositif de préhension 10 comporte des moyens de rappel élastique de l'élément mobile 16 vers sa position haute, de sorte que le dispositif de préhension 10 passe en position repliée dès que les sièges ne sont pas utilisés.

On notera que le dispositif de préhension 10 en position repliée n'est pas beaucoup plus encombrant qu'une barre de préhension classique, si bien qu'il peut être utilisé de la même manière qu'une telle barre de préhension classique.

Avantageusement, le véhicule de transport public est dépourvu de siège fixe (c'est-à-dire de siège non-pliable) pour passagers, et ne comporte, en tant que sièges de passagers, que ceux des dispositifs de préhension 10. Ainsi, l'espace disponible dans la salle de passagers est bien plus important que s'il y avait des sièges fixes, ce qui permet à la salle d'accueillir un plus grand nombre de passagers.

Le véhicule de transport peut toutefois comporter des appuis ischiatiques pour les passagers, longeant des parois de la salle de voyageurs.

On notera que l'invention n'est pas limitée au mode de réalisation précédemment décrit, et pourrait présenter diverses variantes envisageables.

## Revendications

1. Dispositif de préhension (10) pour véhicule de transport public, comportant une barre verticale de préhension (14), s'étendant le long d'un axe vertical, et destinée à être saisie par un passager pour se maintenir en position debout, **caractérisé en ce qu'**il comporte :
- un élément (16) mobile en translation le long d'une direction parallèle à l'axe vertical, entre une position haute et une position basse,
- au moins un élément de siège pliable (18), relié à l'élément mobile (16), et mobile entre une position repliée lorsque l'élément mobile (16) est en position haute, et une position déployée lorsque l'élément mobile (16) est en position basse.

2. Dispositif de préhension (10) selon la revendication 1, dans lequel l'élément de siège (18) comporte deux premières tiges latérales (20), s'étendant chacune entre une première extrémité supérieure et une première extrémité inférieure respectives, et deux secondes tiges latérales (22), s'étendant chacune entre une seconde extrémité supérieure et une seconde extrémité inférieure respectives, et telles que :
- chaque première extrémité supérieure est reliée à l'élément mobile (16) par une première liaison pivot (24),
- chaque première extrémité inférieure est reliée à l'une respective des secondes extrémités supérieures par une seconde liaison pivot (26),
- chaque seconde extrémité inférieure est reliée à un élément fixe (12) par une troisième liaison pivot (28), et
- un organe d'assise pliable (30) s'étend entre les deux premières tiges latérales (20).

3. Dispositif de préhension (10) selon la revendication 2, dans lequel l'organe d'assise pliable (30) est formé par un tissu, notamment au moins partiellement en kevlar.

4. Dispositif de préhension (10) selon l'une quelconque des revendications précédentes, comportant un pied (12) concentrique avec la barre verticale (14), et de diamètre supérieur à celui de la barre verticale (14), l'élément mobile (16) étant relié à ce pied (12) par une liaison glissante.

5. Dispositif de préhension (10) selon la revendication 4 prise en combinaison avec la revendication 2 ou 3, dans lequel l'élément fixe est formé par le pied (12).

6. Dispositif de préhension (10) selon l'une quelconque des revendications précédentes, comportant une pluralité d'éléments de siège (18), répartis autour de l'axe vertical.

7. Dispositif de préhension (10) selon la revendication 6 prise en combinaison avec la revendication 2 ou 3, dans lequel chaque élément de siège (18) partage chacune de ses premières tiges (20) et secondes tiges (22) avec un autre élément de siège adjacent respectif.

8. Véhicule de transport public, **caractérisé en ce qu'**il comporte au moins un dispositif de préhension (10) selon l'une quelconque des revendications précédentes.

9. Véhicule de transport public selon la revendication 8, dépourvu de siège fixe.
